(19) Europäisches Patentamt
European Patent Office
Office européen des brevets

(11) EP 0 568 875 B1

(12) EUROPÄISCHE PATENTSCHRIFT

(45) Veröffentlichungstag und Bekanntmachung des Hinweises auf die Patenterteilung:
**17.01.1996 Patentblatt 1996/03**

(51) Int Cl.[6]: **C08L 25/02**, C08L 55/02

(21) Anmeldenummer: **93106627.8**

(22) Anmeldetag: **23.04.1993**

(54) **ABS-Massen**

ABS masses

Masses ABS

(84) Benannte Vertragsstaaten:
**DE ES FR GB IT**

(30) Priorität: **06.05.1992 DE 4214939**
**06.05.1992 DE 4214940**
**06.05.1992 DE 4214942**

(43) Veröffentlichungstag der Anmeldung:
**10.11.1993 Patentblatt 1993/45**

(73) Patentinhaber: **BAYER AG**
**D-51368 Leverkusen (DE)**

(72) Erfinder:
- **Eichenauer, Herbert, Dr.**
  **W-4047 Dormagen 1 (DE)**
- **Ott, Karl-Heinz, Dr.**
  **W-5090 Leverkusen 1 (DE)**
- **Wittmann, Dieter, Dr.**
  **W-5000 Köln 80 (DE)**
- **Pischtschan, Alfred, Dr.**
  **W-5067 Kürten-Eichhof (DE)**

(56) Entgegenhaltungen:
**EP-A- 0 488 930** **EP-A- 0 488 932**

EP 0 568 875 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

ABS-Polymerisate zeichnen sich durch ein ausgewogenes Eigenschaftsbild aus und werden daher schon seit Jahren in großen Mengen als thermoplastisches Harz für die Herstellung von Formteilen aller Art eingesetzt.

Mit zunehmendem Einsatz dieser Polymerisate steigen jedoch auch die Anforderungen an die ABS-Werkstoffe, insbesondere dann, wenn daraus neuartige Teile hergestellt werden oder neue Anwendungsbereiche unter Einsatz dieser thermoplastischen Werkstoffe erschlossen werden sollen.

So werden für neuartige Anwendungen, z.B. für die Herstellung großflächiger Teile oder Teile mit langen Fließwegen (beim Spritzguß), Materialien benötigt, die gleichzeitig hohe Zähigkeit, genügend hohe Wärmeformbeständigkeit, hohen Oberflächenglanz und sehr gute thermoplastische Verarbeitbarkeit aufweisen.

ABS-Werkstoffe, die jede der geforderten Eigenschaften einzeln besitzen, sind bekannt. Z.B. werden ABS-Polymerisate mit hoher Zähigkeit in der EP-A 116 330 beschrieben; allerdings sind hierbei nur Produkte ohne guten Oberflächenglanz mit geringen Wärmeformbeständigkeiten und sehr niedriger Härte erhältlich.

Die Herstellung von ABS-Polymerisaten mit sehr guter Fließfähigkeit durch Zusatz großer Gleitmittelmengen ist ebenfalls bekannt, gleichzeitig werden durch diesen Zusatz jedoch die sonstigen Eigenschaften verschlechtert.

Es wurde gefunden, daß die folgenden Mischungen vom ABS-Typ gleichzeitig sehr hohe Zähigkeit, hohe Wärmeformbeständigkeit, gute Härte, guten Oberflächenglanz und sehr gute thermoplastische Verarbeitbarkeit besitzen:

A) 5 bis 80 Gew,-Teile, vorzugsweise 20 bis 70 Gew.-Teile, thermoplastisches Co- oder Terpolymerisat, aus den Monomeren Styrol, α-Methylstyrol, Methylmethacrylat, Acrylnitril mit einem mittleren Molekulargewicht ($\overline{M}_w$) von 70.000 bis weniger als 120.000,

B) 1 bis 30 Gew.-Teile, vorzugsweise 4 bis 20 Gew,-Teile, thermoplastisches Copolymerisat, aus 60 bis 95 Gew.-%, vorzugsweise 65 bis 85 Gew.-%, Styrol und/oder α-Methylstyrol und 40 bis 5 Gew.-%, vorzugsweise 35 bis 15 Gew.-%, Acrylnitril mit einem mittleren Molekulargewicht ($\overline{M}_w$) von 25.000 bis 60.000, vorzugsweise von 30.000 bis 55.000,

C) 0,1 bis 10 Gew.-Teile, vorzugsweise 0,5 bis 5 Gew.-Teile, thermoplastisches Co- oder Terpolymerisat, aus den Monomeren Styrol, α-Methylstyrol, Methylmethacrylat, Acrylnitril mit einem mittleren Molekulargewicht ($\overline{M}_w$) von 1.500 bis 6.000, vorzugsweise von 2.000 bis 6.000, und

D) 0,5 bis 50 Gew.-Teile, vorzugsweise 1 bis 40 Gew.-Teile, insbesondere 12 bis 35 Gew.-Teile, teilchenförmiger gepfropfter Kautschuk mit einer Glasübergangstemperatur ≤ 10°C und einem mittleren Teilchendurchmesser ($d_{50}$) von 0,05 bis 0,50 µm, vorzugsweise von 0,10 bis 0,45 µm, der pro 100 Gew.-Teile Kautschuk 15 bis 80 Gew.-Teile, vorzugsweise 20 bis 75 Gew.-Teile, eines Polymerisats aus Styrol, Methylmethacrylat, Acrylnitril oder Mischungen daraus chemisch gebunden enthält.

Die erfindungsgemäßen Mischungen (Formmassen) können hergestellt werden durch Vermischen von A, B, C und D in der Schmelze, gegebenenfalls unter Zusatz üblicher Additive, bis ein homogener Zustand erreicht ist.

Ein bevorzugtes Verfahren zur Herstellung der Formmassen ist, zunächst B, C und D zu mischen und anschließend diese Mischung mit A zu vermischen.

In einer bevorzugten Ausführungsform enthalten die Mischungen zusätzlich

E) 10 bis 300 Gew.-Teile, vorzugsweise 25 bis 200 Gew.-Teile, und besonders bevorzugt 25 bis 150 Gew.-Teile pro 100 Gew.-Teile A+B+C+D, aromatisches Polycarbonat und/oder Polyalkylenterephathalat.

Diese Massen haben bevorzugt die folgende Zusammensetzung:

A) 5 bis 60 Gew.-Teile, vorzugsweise 10 bis 50 Gew.-Teile, thermoplastisches Co- oder Terpolymerisat aus den Monomeren Styrol, α-Methylstyrol, Methylmethacrylat, Acrylnitril mit einem mittleren Molekulargewicht ($\overline{M}_w$) von 70.000 bis weniger als 120.000,

B) 1 bis 15 Gew.-Teile, vorzugsweise 2 bis 10 Gew.-Teile, thermoplastisches Copolymerisat aus 60 bis 95 Gew.-%, vorzugsweise 65 bis 85 Gew.-%, Styrol und/oder α-Methylstyrol und 40 bis 5 Gew.-%, vorzugsweise 35 bis 15 Gew.-%, Acrylnitril mit einem mittleren Molekulargewicht ($\overline{M}_w$) von 25.000 bis 60.000, vorzugsweise von 30.000 bis 55.000,

C) 0,1 bis 5 Gew.-Teile, vorzugsweise 0,5 bis 2,5 Gew.-Teile, thermoplastisches Co- oder Terpolymerisat, aus den

Monomeren, Styrol, α-Methylstyrol, Methylmethacrylat, Acrylnitril mit einem mittleren Molekulargewicht ($\overline{M}_w$) von 1.500 bis 6.000, vorzugsweise von 2.000 bis 6.000,

D) 0,5 bis 40 Gew.-Teile, vorzugsweise 1 bis 35 Gew.-Teile, insbesondere 5 bis 35 Gew.-Teile, teilchenförmiger gepfropfter Kautschuk mit einer Glasübergangstemperatur ≤ 10°C und einem mittleren Teilchendurchmesser ($d_{50}$) von 0,05 bis 0,50 µm, vorzugsweise von 0,10 bis 0,45 µm, der pro 100 Gew.-Teile Kautschuk 15 bis 80 Gew.-Teile, vorzugsweise 20 bis 75 Gew.-Teile, eines Polymerisats aus Styrol, Methylmethacrylat, Acrylnitril oder Mischungen daraus chemisch gebunden enthält und

E) 10 bis 300 Gew.-Teile, vorzugsweise 25 bis 200 Gew.-Teile, und besonders bevorzugt 25 bis 150 Gew.-Teile pro 100 Gew.-Teile A+B+D+C, aromatisches Polycarbonat und/oder Polyalkylenterephthalat.

Diese bevorzugten Mischungen (Formmassen) können hergestellt werden durch Vermischen von A, B, C, D, und E in der Schmelze, gegebenenfalls unter Zusatz üblicher Additive, bis ein homogener Zustand erreicht ist.

Ein bevorzugtes Verfahren zur Herstellung dieser Formmassen ist, zunächst B, C und D zu mischen und anschließend diese Mischung mit A und E zu vermischen.

In einer weiteren bevorzugten Ausführungsform enthalten diese Massen zusätzlich

F) 1 bis 40 Gew.-Teile, vorzugsweise 2,5 bis 30 Gew.-Teile, und besonders bevorzugt 2,5 bis 15 Gew.-Teile, thermoplastisches Polyurethan.

Diese Massen haben bevorzugt die folgende Zusammensetzung

A) 10 bis 80 Gew.-Teile, vorzugsweise 20 bis 70 Gew.-Teile, thermoplastisches Co- oder Terpolymerisat, aus den Monomeren, Styrol, α-Methylstyrol, Methylmethacrylat, Acryl itril mit einem mittleren Molekulargewicht ($\overline{M}_w$) von 70.000 bis weniger als 120.000,

B) 1 bis 30 Gew.-Teile, vorzugsweise 4 bis 20 Gew.-Teile, thermoplastisches Copolymerisat aus 60 bis 95 Gew.-%, vorzugsweise 65 bis 85 Gew.-%, Styrol und/oder α-Methylstyrol und 40 bis 5 Gew.-%, vorzugsweise 35 bis 15 Gew.-%, Acrylnitril mit einem mittleren Molekulargewicht ($\overline{M}_w$) von 25.000 bis 60,000, vorzugsweise von 30.000 bis 55.000,

C) 0,1 bis 5 Gew.-Teile, vorzugsweise 0,5 bis 2,5 Gew.-Teile, thermoplastisches Co- oder Terpolymerisat, aus den Monomeren Styrol, α-Methylstyrol, Methylmethacrylat, Acrylnitril mit einem mittleren Molekulargewicht ($\overline{M}_w$) von 1.500 bis 6.000, vorzugsweise von 2.000 bis 6.000,

D) 0,5 bis 50 Gew.-Teile, vorzugsweise 1 bis 40 Gew.-Teile, insbesondere 12 bis 35 Gew.-Teile, teilchenförmiger gepfropfter Kautschuk mit einer Glasübergangstemperatur ≤ 10°C und einem mittleren Teilchendurchmesser ($d_{50}$) von 0,05 bis 0,50 µm, vorzugsweise von 0,10 bis 0,45 µm, der pro 100 Gew.-Teile Kautschuk 15 bis 80 Gew.-Teile, vorzugsweise 20 bis 75 Gew.-Teile, eines Polymerisats aus Styrol, Methylmethacrylat, Acrylnitril oder Mischungen daraus chemisch gebunden enthält und

F) 1 bis 40 Gew.-Teile, vorzugsweise 2,5 bis 30 Gew.-Teile, und besonders bevorzugt 2,5 bis 15 Gew.-Teile, thermoplastisches Polyurethan.

Diese bevorzugten Mischungen (Formmassen) können hergestellt weden durch Vermischen von A, B, C, D und F in der Schmelze, gegebenenfalls unter Zusatz üblicher Additive, bis ein homogener Zustand erreicht ist.

Ein bevorzugtes Verfahren zur Herstellung dieser Massen ist zunächst B, C, und D zu mischen und anschließend diese Mischung mit A und F zu vermischen.

Erfindungsgemäß geeignete thermoplastische Polymerisate A bestehen aus beliebigen Kombinationen von polymerisiertem Styrol, α-Methylstyrol, Methylmethacrylat, Acrylnitril. Besonders bevorzugte Polymerisate A werden aus Styrol/Acrylnitril-Gemischen, α-Methylstyrol/Acrylnitril-Gemischen und Styrol/α-Methylstyrol/Acrylnitril-Gemischen gewonnen.

Die Polymerisate A sind bekannt und lassen sich durch radikalische Polymerisation, insbesondere durch Emulsions-, Suspensions-, Lösungs- oder Massepolymerisation herstellen (DE-OS 2 619 969).

Sie müssen mittlere Molekulargewichte ($\overline{M}_w$) von 70.000 bis weniger als 120.000, aufweisen, ihre molekulare Uneinheitlichkeit $\overline{M}_w/\overline{M}_n$-1 beträgt 1 bis 5, vorzugsweise ≤ 2.

Erfindungsgemäß geeignete thermoplastische Polymerisate B werden erhalten durch Polymerisation von 60 bis 95 Gew.- %, vorzugsweise 65 bis 85 Gew.-%, Styrol und/oder α- Methylstyrol und 40 bis 5 Gew.-%, vorzugsweise 35 bis 15 Gew.-%, Acrylnitril.

Die Polymerisate B sind bekannt und können durch radikalische Polymerisation, insbesondere durch Emulsions-, Suspensions-, Lösungs- oder Massepolymerisation hergestellt werden (z.B, gemäß DE-OS 2 619 969); sie können z.B, auch bei der in Emulsion, Suspension, Lösung oder Masse durchgeführten Pfropfpolymerisation in Form von nicht chemisch an die Pfropfgrundlage (im allgemeinen Kautschuk) gebundenen Polymeren entstehen. Sie müssen mittlere Molekulargewichte ($\overline{M}_w$) von 25.000 bis 60.000, vorzugsweise von 30.000 bis 55.000 aufweisen, ihre molekulare Uneinheitlichkeit $\overline{M}_W/\overline{M}_n$-1 beträgt 1 bis 5, vorzugsweise ≤ 2.

Erfindungsgemäß geeignete thermoplastische Polymerisate C werden erhalten durch Polymerisation beliebiger Mischungen von Styrol, α-Methylstyrol, Methylmethacrylat, Acrylnitril. Besonders bevorzugte Polymerisate C werden aus Styrol/Acrylnitril-Gemischen, α-Methylstyrol/Acrylnitril-Gemischen, Styrol/α-Methylstyrol/ Acrylnitril-Gemischen gewonnen.

Die Polymerisate C sind bekannt und lassen sich durch radikalische Polymerisation, insbesondere durch Emulsions-, Suspensions-, Lösungs- oder Massepolymerisation herstellen (z.B. gemäß DE-OS 2 619 969 unter Verwendung molekulargewichtsregelnder Verbindungen). Sie müssen mittlere Molekulargewichte ($\overline{M}_w$) von 1.500 bis 6.000, vorzugsweise von 2.000 bis 6.000, aufweisen.

Zur Herstellung der gepfropften Kautschuke D geeignete Kautschuke mit einer Glastemperatur ≤ 10°C sind insbesondere Polybutadien, Butadien/Styrol-Copolymerisate, Butadien/Acrylnitril-Copolymerisate, Polyisopren oder Alkylacrylatkautschuke auf der Basis von $C_1$-$C_8$-Alkylacrylaten, insbesondere Ethyl-, Butyl-, Ethylhexylacrylat.

Die Alkylacrylatkautschuke können gegebenenfalls bis zu 30 Gew.-% (bezogen auf Kautschuk) Monomere wie Vinylacetat, Acrylnitril, Styrol, Methylmethacrylat und/oder Vinylether copolymerisiert enthalten. Die Alkylacrylatkautschuke können weiterhin kleinere Mengen, vorzugsweise bis zu 5 Gew.-% (bezogen auf Kautschuk) vernetzend wirkender ethylenisch ungesättigter Monomerer einpolymerisiert enthalten. Solche Vernetzer sind z.B. Alkylendioldiacrylate und -methacrylate, Polyester-diacrylate und -methacrylate, Divinylbenzol, Trivinylbenzol, Triallylcyanurat, Allylacrylat, Allylmethacrylat, Butadien oder Isopren.

Geeignet (als Pfropfgrundlage) sind auch Acrylatkautschuke mit Kern/Mantel-Struktur mit einem Kern aus vernetztem Dienkautschuk (Polymerisat aus einem oder mehreren konjugierten Dienen, wie Polybutadien, oder Copolymerisat eines konjugierten Diens mit einem ethylenisch ungesättigten Monomer wie Styrol und/oder Acrylnitril).

Bevorzugter Kautschuk zur Herstellung der Pfropfkautschuke D) ist Polybutadien.

Die Kautschuke liegen im Pfropfkautschuk D in Form wenigstens partiell vernetzter Teilchen eines mittleren Teilchendurchmessers ($d_{50}$) von 0,05 bis 0,50 µm, bevorzugt von 0,10 bis 0,45 µm, vor.

Die Pfropfkautschuke D enthalten pro 100 Gew.-Teile Kautschuk 15 bis 80 Gew.-Teile, vorzugsweise 20 bis 75 Gew.-Teile, eines Polymerisats aus Styrol, Methylmethacrylat, Acrylnitril oder Mischungen daraus chemisch gebunden.

Die Pfropfkautschuke D werden durch radikalische Polymerisation der oben angegebenen Monomeren (Styrol, α-Methylstyrol, Methylmethacrylat, Acrylnitril oder Gemische) in Gegenwart der Kautschuke, vorzugsweise durch Emulsionspolymerisation, hergestellt (DE-OS 1 300 241).

Besonders bevorzugte Pfropfkautschuke D sind die ABS-Polymerisate.

Geeignete thermoplastische Polycarbonate E sind Homopolycarbonate und Copolycarbonate aus den Diphenolen der Formeln (I) und (II)

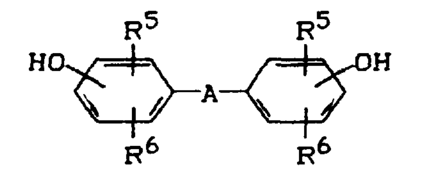

(I)

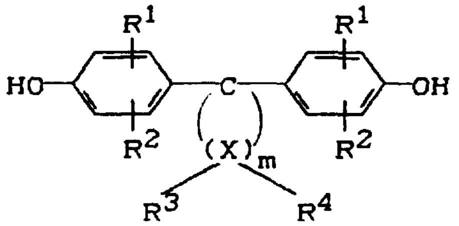

(II)

worin

A eine Einfachbindung, $C_1$-$C_5$-Alkylen, $C_2$-$C_5$-Alkyliden, $C_5$-$C_6$-Cycloalkyliden, -O-, -S- oder -$SO_2$-ist,

$R^5$ und $R^6$ unabhängig voneinander für Wasserstoff, Methyl oder Halogen, insbesondere für Wasserstoff, Methyl,

Chlor oder Brom stehen,

$R^1$ und $R^2$ unabhängig voneinander Wasserstoff, Halogen bevorzugt Chlor oder Brom, $C_1$-$c_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zahl von 4 bis 7, bevorzugt 4 oder 5, ist,

$R^3$ und $R^4$ für jedes X individuell wählbar sind und unabhängig voneinander Wasserstoff oder $C_1$-$C_6$-Alkyl bedeuten und

X Kohlenstoff bedeutet.

Die Polycarbonate E können linear oder verzweigt sein, sie können aromatisch gebundenes Halogen, vorzugsweise Brom und/oder Chlor enthalten, sie können aber auch halogenfrei sein.

Die Polycarbonate E können einzeln oder als Gemische eingesetzt werden.

Die Diphenole der Formeln (I) und (II) sind literaturbekannt oder nach literaturbekannten Verfahren herstellbar (siehe z.B. EP-A 0 359 953).

Die Herstellung der erfindungsgemäß geeigneten Polycarbonate E ist bekannt und z.B. mit Phosgen nach dem Phasengrenzflächenverfahren oder mit Phosgen nach dem Verfahren in homogener Phase (dem sogenannten Pyridinverfahren) möglich, wobei das Molekulargewicht in bekannter Weise durch eine entsprechende Menge an bekannten Kettenabbrechern eingestellt werden kann.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die erfindungsgemäß geeigneten Polycarbonate E können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B, solchen mit drei oder mehr als drei phenolischen OH-Gruppen.

Sie haben mittlere Molekulargewichte ($\overline{M}_w$, Gewichtsmittel) bestimmt z.B, durch Ultrazentrifugation oder Streulichtmessung von 10.000 bis 200.000, vorzugsweise von 20.000 bis 80.000.

Geeignete Diphenole der Formeln (I) und (II) sind z.B. Hydrochinon, Resorcin, 4,4'-Dihydroxydiphenyl, 2,2-Bis(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Polyalkylenterephthalate E sind Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte,

Bevorzugte Polyalkylenterephthalate E lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten E sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate E können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate E können durch Einbau, relativ kleiner Mengen 3- oder 4-wertiger Alkohole oder 3-

oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate E, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate E sind auch Copolyester, die aus mindestens zwei der obengenannten Alkoholkomponenten hergestellt sind; besonders bevorzugte Copolyester sind Poly-(ethylenglykolbutandiol-1,4)-terephthalate.

Die als Komponente E vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1Gew.-Tl.) bei 25°C.

Die erfindungsgemäßen Mischungen enthaltend A, B, C, D und E sowie gegebenenfalls übliche Zusatzstoffe wie Gleitmittel, Stabilisatoren, Pigmente, Entformungsmittel, Antistatika, Füllstoffe (z.B. Glasfasern, Glaskugeln, Kieselgel) werden hergestellt, indem man die jeweiligen Bestandteile in bekannter Weise simultan oder sukzessive vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Ein bevorzugtes Verfahren zur Herstellung der Formmassen durch Vermischen spezieller Kombinationen von Einzelkomponenten ist oben beschrieben; durch dieses Verfahren gelingt die Erzeugung von Formmassen, die zu Formteilen mit besonders guter Oberflächenqualität führen.

Geeignete thermoplastische Polyurethane F sind Produkte, die durch Reaktion von mindestens einem Diisocyanat, mindestens einem vorzugsweise kurzkettigen Kettenverlängerer (insbesondere Diole) und mindestens einer Hydroxylgruppen oder Aminogruppen enthaltenden höhermolekularen Verbindungen erhalten wurden. Derartige Produkte sind bekannt.

Erfindungsgemäß zu verwendende Diisocyanate sind die an sich bekannten aliphatischen, cycloaliphatischen, araliphatischen, aromatischen und heterocyclischen Diisocyanate. Erfindungsgemäß bevorzugte Diisocyanate sind aromatische Diisocyanate, Naphthylen-1,5-diisocyanat, 3,3'-Dimethyl-4,4'-diisocyanatodiphenyl (TODI), 1,4-Diisocyanatobenzol und das entsprechend hydrierte Produkt, Toluylendiisocyanate und insbesondere die Diphenylmethandiisocyanat-Isomeren. Besonders bevorzugt ist das 4,4'-Diisocyanatodiphenylmethan oder sein Isomerengemisch mit bis zu 5 Mol-%, vorzugsweise 1 bis 4 Mol-%, des 2,4'-Diisocyanatodiphenylmethans, zumeist begleitet von sehr geringen Mengen des 2,2'-Diisocyanato-diphenylmethan-Isomeren.

Die genannten Diisocyanate können gegebenenfalls zusammen mit bis etwa 15 Mol-% (bezogen auf Diisocyanat) eines höherfunktionellen Polyisocyanates eingesetzt werden; die Menge des höherfunktionellen Polyisocyanats muß jedoch so begrenzt werden, daß ein noch schmelzbares bzw. thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen bzw. auch von Monoisocyanaten ausgeglichen werden, so daß eine zu weit gehende chemische Vernetzung des Produktes vermieden wird. Beispiele für höherfunktionelle Isocyanate und monofunktionelle Verbindungen sind dem Stand der Technik zu entnehmen. Beispielsweise seien Monoamine wie Butyl-oder Dibutylamin, Hydroxylamin, Stearylamin, N-Methylstearylamin, sowie Monoalkohole wie Butanol-1, 2-Ethylhexanol-1, Dodecanol-1, Isobutanol oder tert.-Butanol, Cyclohexanol oder Ethylenglykolmonomethylether und Stearylalkohol erwähnt.

Bevorzugte Kettenverlängerungsmittel sind z.B. die in DE-A 2 302 564, 2 423 764, 2 549 372, 2 402 840, 2 457 387 und 2 854 384 beschriebenen Verbindungen. Es sind dies insbesondere niedermolekulare Polyalkohole, vorzugsweise Diole, Diamine, insbesondere aliphatische Diamine, Hydrazine und Hydrazidderivate. Als Diamine seien Diethyl-toluylendiamine oder Isophorondiamin genannt. Auch Aminoalkohole wie Ethanolamin, Diethanolamin, n-Methyldiethanolamin, 3-Aminopropanol oder Verbindungen wie Hydrazin (Hydrat) oder Carbodihydrazid kommen erfindungsgemäß in Frage. Bevorzugte Kettenverlängerungsmittel sind Diole wie z.B. Ethylenglykol, Diund Triethylenglykol, Hexandiol-1,6 und Hydrochinon-di-β-hydroxyethylether, sowie besonders bevorzugt das Butanol-1,4, gegebenenfalls in Gemischen mit anderen Diolen, insbesondere Hexandiol-1,6. Bevorzugt werden Gemische von 96 bis 80 Mol-% Butandiol-1,4 mit 4 bis 20 Mol-% Hexandiol-1,6. Das Molekulargewicht der Kettenverlängerer liegt bei 32 bis 399, bevorzut bei 62 bis 220.

Ferner können in bekannter Weise monofunktionelle Verbindungen in untergeordneten Anteilen, z.B. von 0,01 bis 4 Gew.-%, bezogen auf Polyurethan-Feststoff, als sogenannte Kettenabbrecher mitverwendet werden. Beispiele sind Monoalkohole wie Butanol, 2-Ethylhexanol, Isobutylalkohol, Octanol-1, Stearylalkohol oder Monoamine wie Anilin, Dibutylamin, N-Methylstearylamin oder Piperidin.

Bevorzugte Hydroxylgruppen-haltige höhermolekulare Verbindungen sind Polyester-, Polyestercarbonat- und Polyetherdiole, z.B. Polyesterdiole aus geradkettigen oder verzweigten aliphatischen und/oder cycloaliphatischen Diolen

und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten.

Ferner sind geeignet Hydroxypolycarbonate und Hydroxypolycaprolactone. In einer besonders bevorzugten Ausführungsform wird Butandiol-1,4-adipat vom Molekulargewicht 1.500 bis 3.000 verwendet.

Bevorzugt werden ferner Hydroxyetherdiole auf Basis Ethylenoxid, Propylenoxid oder Mischpolyether aus Propylenoxid und/oder Ethylenoxid und/oder Tetrahydrofuran, so z.B. Hydroxyetherdiole auf Basis Tetrahydrofuran mit einem Molekulargewicht von 1.000 bis 3.000. Geeignete Polyole werden z.B. in den DE-OS 2 302 564, 2 423 764, 2 549 372 (US-PS 3 963 679), DE-OS 2 402 840 (US-PS 3 984 607), DE-AS 2 457 387 (US-PS 4 035 213) und in der DE-OS 2 854 384, 2 920 501 und 3 405 531 eingehend beschrieben.

Gegebenenfalls können auch höhermolekulare Polyaminoverbindungen, vorzugsweise mit primären aromatischen Aminogruppen eingesetzt werden. Bevorzugte Vertreter werden beispielsweise durch Hydrolyse von entsprechenden NCO-Prepolymeren auf der Basis von höhermolekularen Polyhydroxyverbindungen und überschüssigen aromatischen Diisocyanaten durch (vorzugsweise basische) Hydrolyse hergestellt. Beispiele für diese Verfahren werden in DE-OS 2 948 419, DE-OS 3 039 600, DE-OS 3 112 118, EP-A 61 627, EP-A 71 132 und EP-A 97 869 angegeben. In der erstgenannten Schrift werden auch weitere Verfahren zur Herstellung von aromatischen Aminoverbindungen höhermolekularer Struktur, sogenannter Aminopolyether, genannt, wie sie für das erfindungsgemäße Verfahren geeignet sind. Weitere Herstellungsverfahren werden in der DE-AS 1 694 152, FR-PS 1 415 317 und DE-AS 1 155 907 beschrieben.

Die erfindungsgemäßen Mischungen enthaltend A, B, C, D, gegebenenfalls E oder F, sowie gegebenenfalls übliche Zusatzstoffe wie Gleitmittel, Stabilisatoren, Pigmente, Entformungsmittel, Antistatika, Füllstoffe (z.B. Glasfasern, Glaskugeln, Kieselgel) werden hergestellt, indem man die jeweiligen Bestandteile in bekannter Weise simultan oder sukzessive bei Raumtemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Ein bevorzugtes Verfahren zur Herstellung der Formmassen durch Vermischen spezieller Kombinationen von Einzelkomponenten ist oben beschrieben; durch dieses Verfahren gelingt die Erzeugung von Formmassen, die zu Formteilen mit besonders guter Oberflächenqualität führen.

Die Formmassen der vorliegenden Erfindung können zur Herstellung von Formkörpern jeder Art verwendet werden, wobei übliche Herstellungsweisen benutzt werden können; insbesondere eignen sie sich zur Herstellung von solchen Teilen, bei denen eine Kombination aus hoher Zähigkeit, hoher Härte, gutem Oberflächenglanz, guter Wärmeformbeständigkeit und sehr guter thermoplastischer Verarbeitbarkeit gefordert wird wie z.B. großflächige Verkleidungen für den Kfz.-Innenraum mit langen Fließwegen oder Gehäuse für Radio- und Fernsehgeräte oder Computer, die z.B. sehr viele Rippen aufweisen.

Die Verarbeitung der Formmassen zu Formkörpern erfolgt vorzugsweise durch Spritzgießen, kann aber auch z.B. durch Tiefziehen aus vorher nach bekannten Verfahren hergestellten Platten oder Folien durchgeführt werden.

Die oben angegebenen Teilchengrößen bedeuten immer mittlerer Teilchendurchmesser $d_{50}$, ermittelt durch Ultrazentrifugenmessungen nach W. Scholtan et al., Kolloid-Z. u.Z. Polymere 250 (1972), 782 bis 796.

<u>Beispiels</u>

I. Mischungen aus A, B, C und D

<u>Thermoplastisches Harz A</u>

Statistisches Styrol/Acrylnitril = 72:28-Copolymerisat mit einem $\overline{M}_w$ von ca. 105.000 und einer molekularen Uneinheitlichkeit $\overline{M}_w/\overline{M}_n$-1 ≤2, erhalten durch radikalische Lösungspolymerisation.

<u>Thermoplastisches Harz B.1</u>

Statistisches Styrol/Acrylnitril = 72:28-Copolymerisat mit einem $\overline{M}_w$ von ca. 51.000 und einer molekularen Uneinheitlichkeit $\overline{M}_w/\overline{M}_n$-1 ≤2, erhalten durch radikalische Emulsionspolymerisation.

<u>Thermoplastisches Harz B.2</u>

Statistisches Styrol/Acrylnitril = 72:28-Copolymerisat mit einem $\overline{M}_w$ von ca. 41.000, erhalten durch "Nebenherpolymerisation" von Styrol und Acrylnitril (nicht aufgepfropftes Styrol/Acrylnitril-Copolymer) bei der Herstellung eines Pfropfkautschuks durch radikalische Emulsionspolymerisation.

Thermoplastisches Harz B.3

Statistisches Styrol/Acrylnitril = 72:28-Copolymerisat mit einem $\overline{M}_w$ von ca. 31.000, erhalten durch "Nebenherpolymerisation" von Styrol und Acrylnitril (nicht aufgepfropftes Styrol/Acrylnitril-Copolymer) bei der Herstellung eines Pfropfkautschuks durch radikalische Emulsionspolymerisation.

Thermoplastisches Harz C

Statistisches Styrol/Acrylnitril = 72:28-Copolymerisat mit einem $\overline{M}_w$ von ca. 4,500, erhalten durch radikalische Emulsionspolymerisation.

Pfropfkautschuk D.1

Pfropfkautschuk erhalten durch radikalische Emulsionspolymerisation eines Styrol/Acrylnitril = 72:28-Gemisches unter Verwendung eines teilchenförmigen Polybutadiens, wobei ein mittlerer Teilchendurchmesser ($d_{50}$) von ca, 0,38 µm resultiert und pro 100 Gew.-Teile Polybutadien 62 Gew.-Teile Styrol/Acrylnitril-Copolymerisat chemisch an das Polybutadien gebunden sind.

Pfropfkautschuk D.2

Pfropfkautschuk erhalten durch radikalische Emulsionspolymerisation eines Styrol/Acrylnitril = 72:28-Gemisches unter Verwendung eines teilchenförmigen Polybutadiens, wobei ein mittlerer Teilchendurchmesser ($d_{50}$) von ca. 0,38 µm resultiert und pro 100 Gew.-Teile Polybutadien 21 Gew.-Teile Styrol/Acrylnitril-Copolymerisat chemisch an das Polybutadien gebunden sind.

Die Produkte A-D werden in einem 1,3 l Innenkneter bei Temperaturen von 160°C bis 220°C durch Zusammenschmelzen vermischt. Prüfkörper werden durch Spritzgießen bei 240°C erhalten.

Die Kerbschlagzähigkeit wurde bei Zimmertemperatur ($a_k^{RT}$) und bei -40°C ($a_K^{-40°C}$) nach ISO 180/1A (Einheit: $kJ/m^2$ ) ermittelt, die Härte wurde nach DIN 53 456 (Einheit: $N/mm^2$ ) und die Wärmsformbeständigkeit nach Vicat (Methode B) gemäß DIN 53 460 (Einheit: °C) gemessen. Die Verarbeitbarkeit wurde durch Messung des Volumen-Fließindex MVI nach DIN 53 735 U (Einheit: $cm^3$ / 10 min) sowie des notwendigen Fülldruckes (siehe F. Johannaber, Kunststoffe 74 (1984), 1, Seiten 2 bis 5) charakterisiert; die Glanzmessung wurde entsprechend DIN 67 530 an einer ebenen Platte bei einem Reflektionswinkel von 60° (Reflektometerwert) mit Hilfe des Mehrwinkel-Reflektometers "Multi-Gloss" der Firma Byk-Mallinckrodt durchgeführt.

In Tabelle 1 sind die Zusammensetzungen der untersuchten Massen, in Tabelle 2 die erhaltenen Meßdaten zusammengestellt. Die erfindungsgemäßen Mischungen weisen gleichzeitig hohe Zähigkeit, hohe Härte, hohe Wärmeformbeständigkeit, hohen Glanz und gute Verarbeitbarkeit auf, während die Vergleichsmischungen in mindestens einer Eigenschaft deutlich schlechter sind.

**Tabelle 1** Zusammensetzungen der Massen

| Beispiel | A<br>Gew.-T. | B.1<br>Gew.-T. | B.2<br>Gew.-T. | B.3<br>Gew.-T. | C<br>Gew.-T. | D.1<br>Gew.-T. | D.2<br>Gew.-T. |
|---|---|---|---|---|---|---|---|
| 1 | 48,5 | 10 | 7,6 | - | 1,5 | 32,4 | - |
| 2 | 58,5 | - | 7,6 | - | 1,5 | 32,4 | - |
| 3 (Vergl.) | 10 | 48,5 | 7,6 | - | 1,5 | 32,4 | - |
| 4 (Vergl.) | 1,5 | 48,5 | 7,6 | - | 10 | 32,4 | - |
| 5 (Vergl.) | - | 58,5 | 7,6 | - | 1,5 | 32,4 | - |
| 6 | 56 | 12,5 | - | 4 | 1,5 | - | 26 |
| 7 | 68,5 | - | - | 4 | 1,5 | - | 26 |
| 8 (Vergl.) | 12,5 | 56 | - | 4 | 1,5 | - | 26 |
| 9 (Vergl.) | 1,5 | 56 | - | 4 | 12,5 | - | 26 |
| 10 (Vergl.) | - | 68,5 | - | 4 | 1,5 | - | 26 |

Tabelle 2 Meßdaten der Massen

| Beispiel | RT $a_k$ ($kJ/m^2$) | $-40^0 C$ $a_k$ ($kJ/m^2$) | $H_c$ ($N/mm^2$) | Vicat B ($^0 C$) | MVI ($cm^3$ / 10 min) | Füll-druck (bar) | Glanz-grad |
|---|---|---|---|---|---|---|---|
| 1 | 32 | 16 | 86 | 101 | 10,3 | 172 | 81 |
| 2 | 33 | 20 | 87 | 102 | 8,4 | 154 | 82 |
| 3 (Vergl.) | 20 | 10 | 85 | 99 | 40 | 105 | 73 |
| 4 (Vergl.) | 4 | 3 | 83 | 95 | 99 | 70 | 73 |
| 5 (Vergl.) | 12 | 8 | 85 | 98 | 54 | 91 | 73 |
| 6 | 36 | 11 | 86 | 99 | 12,3 | 133 | 79 |
| 7 | 39 | 12 | 85 | 100 | 9,4 | 139 | 76 |
| 8 (Vergl.) | 13 | 7 | 84 | 97 | 46 | 91 | 73 |
| 9 (Vergl.) | 2 | 3 | 82 | 92 | 153 | 57 | 75 |
| 10 (Vergl.) | 6 | 4 | 83 | 100 | 78 | 78 | 68 |

II. Mischungen aus A, B, C, D und E

Thermoplastisches Harz A

Statistisches Styrol/Acrylnitril = 72:28-Copolymerisat mit einem $\overline{M}_w$ von ca. 05.000 und einer molekularen Uneinheitlichkeit $\overline{M}_w/\overline{M}_n$-1 ≤2, erhalten durch radikalische Lösungspolymerisation.

Thermoplastisches Harz B.1

Statistisches Styrol/Acrylnitril = 72:28-Copolymerisat mit einem $\overline{M}_w$ von ca. 51.000 und einer molaren Uneinheitlichkeit $\overline{M}_w/\overline{M}_n$-1 ≤2, erhalten durch radikalische Emulsionspolymerisation.

Thermoplastisches Harz B.2

Statistisches Styrol/Acrylnitril = 72:28-Copolymerisat mit einem $\overline{M}_w$ von ca. 41.000, erhalten durch "Nebenherpolymerisation" von Styrol und Acrylnitril (nicht aufgepfropftes Styrol/Acrylnitril-Copolymer) bei der Herstellung eines Pfropfkautschuks durch radikalische Emulsionspolymerisation.

Thermoplastisches Harz B.3

Statistisches Styrol/Acrylnitril = 72:28-Copolymerisat mit einem $\overline{M}_w$ von ca. 31.000, erhalten durch "Nebenherpolymerisation" von Styrol und Acrylnitril (nicht aufgepfropftes Styrol/Acrylnitril-Copolymer) bei der Herstellung eines Pfropfkautschuks durch radikalische Emulsionspolymerisation.

Thermoplastisches Harz C

Statistisches Styrol/Acrylnitril = 72:28-Copolymerisat mit einem $\overline{M}_w$ von ca. 4.500, erhalten durch radikalische Emulsionspolymerisation.

Pfropfkautschuk D.1

Pfropfkautschuk erhalten durch radikalische Emulsionspolymerisation eines Styrol/Acrylnitril = 72:28-Gemisches unter Verwendung eines teilchenförmigen Polybutadiens, wobei ein mittlerer Teilchendurchmesser ($d_{50}$) von ca. 0,38 µm resultiert und pro 100 Gew.-Teile Polybutadien 62 Gew.-Teile Styrol/Acrylnitril-Copolymerisat chemisch an das Polybutadien gebunden sind.

Pfropfkautschuk D.2

Pfropfkautschuk erhalten durch radikalische Emulsionspolymerisation eines Styrol/Acrylnitril = 72:28-Gemisches unter Verwendung eines teilchenförmigen Polybutadiens, wobei ein mittlerer Teilchendurchmesser ($d_{50}$) von ca, 0,38 µm resultiert und pro 100 Gew.-Teile Polybutadien 21 Gew.-Teile Styrol/Acrylnitril-Copolymerisat chemisch an das Polybutadien gebunden sind.

Aromatisches Polycarbonatharz E.1

Aromatisches Polycarbonat aus 2,2-Bis-(4-hydroxyphenyl)-propan (Bisphenol A) mit einer relativen Viskosität von 1,26 (gemessen in $CH_2Cl_2$ bei 25°C in Form einer 0,5 gew.-%igen Lösung).

Polybutylenterephthalatharz E.2

®Pocan 1500 der Bayer AG

Die Produkte A-E werden in einem 1,3 1 Innenkneter bei Temperaturen von 180°C bis 240°C durch Zusammenschmelzen gemischt. Prüfkörper werden durch Spritzgießen bei 260°C erhalten.

Die Kerbschlagzähigkeit wurde bei Zimmertemperatur ($a_k^{RT}$) und bei -40°C ($a_k^{-40°C}$) nach ISO 180/1A (Einheit: kJ/m²) ermittelt, die Wärmeformbeständigkeit nach Vicat (Methode B) gemäß DIN 53 460 (Einheit: °C), Die Verarbeitbarkeit wurde durch Messung des Volumen-Fließindex MVI nach DIN 53 735 U (Einheit: cm³/10 min) charakterisiert; die Glanzmessung wurde entsprechend DIN 67 530 an einer ebenen Platte bei einem Reflektionswinkel von 60°C

(Reflektometerwert) mit Hilfe des Mehrwinkel-Reflektometers "Multi-Gloss" der Firma Byk-Mallinckrodt durchgeführt.

In Tabelle 3 sind die Zusammensetzungen der untersuchten Massen, in Tabelle 4 die erhaltenen Meßdaten zusammengestellt. Die erfindungsgemäßen Mischungen weisen gleichzeitig hohe Werte für Zähigkeit, Wärmeformbeständigkeit und Glanz und sehr gute Verarbeitbarkeit auf, während die Vergleichsmischungen in mindestens einer Eigenschaft deutlich schlechter sind.

Tabelle 3: Zusammensetzungen der Massen

| Beispiel | A Gew.-Teile | B.1 Gew.-Teile | B.2 Gew.-Teile | B.3 Gew.-Teile | C Gew.-Teile | D.1 Gew.-Teile | D.2 Gew.-Teile | E.1 Gew.-Teile | E.2 Gew.-Teile |
|---|---|---|---|---|---|---|---|---|---|
| 1 | 16 | 7,5 | 4,75 | - | 1,5 | 20,25 | - | 50 | - |
| 2 (Vergleich) | 1,5 | 16 | 4,75 | - | 7,5 | 20,25 | - | 50 | - |
| 3 (Vergleich) | - | 23,5 | 4,75 | - | 1,5 | 20,25 | - | 50 | - |
| 4 | 38 | 5 | - | 0,6 | 2 | - | 14,4 | 40 | - |
| 5 (Vergleich) | 15 | 15 | - | 0,6 | 15 | - | 14,4 | 40 | - |
| 6 | 44 | 5 | 5,7 | - | 1 | 24,3 | - | 20 | - |
| 7 (Vergleich) | 20 | 15 | 5,7 | - | 15 | 24,3 | - | 20 | - |
| 8 | 6,5 | 2 | 7,6 | - | 1,5 | 32,4 | - | - | 50 |
| 9 (Vergleich) | 1,5 | 2 | 7,6 | - | 6,5 | 32,4 | - | - | 50 |
| 10 | 30 | 8 | 7,6 | - | 2 | 32,4 | - | - | 20 |
| 11 (Vergleich) | 12,5 | 12,5 | 7,6 | - | 15 | 32,4 | - | - | 20 |

**Tabelle 4: Meßdaten der Massen**

| Beispiel | $a_k^{RT}$ (kJ/m²) | $a_k^{-40°C}$ (kJ/m²) | Vicat B (°C) | MVI (cm³/10min) | Glanzgrad |
|---|---|---|---|---|---|
| 1 | 76 | 22 | 114 | 10,1 | 77 |
| 2 (Vergleich) | 55 | 9 | 109 | 5,7 | 73 |
| 3 (Vergleich) | 63 | 18 | 117 | 6,3 | 80 |
| 4 | 73 | 32 | 116 | 8,8 | 77 |
| 5 (Vergleich) | 14 | 3 | 113 | 16,1 | 74 |
| 6 | 34 | 19 | 106 | 4,4 | 79 |
| 7 (Vergleich) | 8 | 2 | 104 | 18,5 | 75 |
| 8 | 29 | 6 | 100 | 2,4 | 80 |
| 9 (Vergleich) | 12 | 6 | 98 | 3,5 | 75 |
| 10 | 23 | 9 | 99 | 4,0 | 78 |
| 11 (Vergleich) | 10 | 6 | 96 | 5,1 | 77 |

III. Mischungen aus A, B, C, D und F

Thermoplastisches Harz A

Statistisches Styrol/Acrylnitril = 72:28-Copolymerisat mit einem $\overline{M}_w$ von ca. 105.000 und einer molekularen Unein-

heilichkeit $\overline{M}_w/\overline{M}_n$-1 ≤2, erhalten durch radikalische Lösungspolymerisation.

Thermoplastisches Harz B.1

Statistisches Styrol/Acrylnitril = 72:28-Copolymerisat mit einem $\overline{M}_w$ von ca. 51.000 und einer molekularen Uneinheitlichkeit $\overline{M}_w/M_n$-1 ≤2, erhalten durch radikalische Emulsionspolymerisation.

Thermoplastisches Harz B.2

Statistisches Styrol/Acrylnitril = 72:28-Copolymerisat mit einem $\overline{M}_w$ von ca. 41.000, erhalten durch "Nebenherpolymerisation" von Styrol und Acrylnitril (nicht aufgepfropftes Styrol/Acrylnitril-Copolymer) bei der Herstellung eines Pfropfkautschuks durch radikalische Emulsionspolymerisation.

Thermoplastisches Harz C

Statistisches Styrol/Acrylnitril = 72:28-Copolymerisat mit einem $\overline{M}_w$ von ca. 4.500, erhalten durch radikalische Emulsionspolymerisation.

Pfropfkautschuk D

Pfropfkautschuk erhalten durch radikalische Emulsionspolymerisation eines Styrol/Acrylnitril = 72:28-Gemisches unter Verwendung eines teilchenförmigen Polybutadiens, wobei ein mittlerer Teilchendurchmesser ($d_{50}$) von ca. 0,38 µm resultiert und pro 100 Gew.-Teile Polybutadien 62 Gew.-Teile Styrol/Acrylnitril-Copolymerisat chemisch an das Polybutadien gebunden sind.

Thermoplastisches Polyurethan F

®Desmopan 385 der Bayer AG

Die Produkte A-F werden in einem 1,3 l Innenkneter bei Temperaturen zwischen 160°C und 200°C durch Zusammenschmelzen vermischt. Prüfkörper werden durch Spritzgießen bei 220°C erhalten.

Die Kerbschlagzähigkeit wurde bei Zimmertemperatur ($a_k^{RT}$) und bei -40°C ($a_k^{-40°C}$) nach ISO 180/1A (Einheit: $kJ/m^2$) ermittelt, die Härte wurde nach DIN 53 456 (Einheit: $N/mm^2$) und die Wärmeformbeständigkeit nach Vicat (Methode B) gemäß DIN 53 460 (Einheit: °C) gemessen. Die Verarbeitbarkeit wurde durch Messung des Volumen-Fließindex MVI nach DIN 53 735 U (Einheit: $cm^3$/10 min) charakterisiert; die Glanzmessung wurde entsprechend DIN 67 530 an einer ebenen Platte bei einem Reflektionswinkel von 60°C (Reflektometerwert) mit Hilfe des Mehrwinkel-Reflektometers "Multi-Gloss" der Firma Byk-Mallinckrodt durchgeführt.

In Tabelle 5 sind die Zusammensetzungen der untersuchten Massen, in Tabelle 6 die erhaltenen Meßdaten zusammengestellt. Die erfindungsgemäßen Mischungen weisen gleichzeitig gute Werte für Zähigkeit, Härte und Wärmeformbeständigkeit, hohen Glanz und eine sehr gute Verarbeitbarkeit auf, während die Vergleichsmischungen in mindestens einer Eigenschaft deutlich schlechter sind.

Tabelle 5: Zusammensetzungen der Massen

| Beispiel | A<br>Gew.-Teile | B.1<br>Gew.-Teile | B.2<br>Gew.-Teile | C<br>Gew.-Teile | D<br>Gew.-Teile | F<br>Gew.-Teile |
|---|---|---|---|---|---|---|
| 1 | 53,5 | 10 | 5,7 | 1,5 | 24,3 | 5 |
| 2 (Vergleich) | 10 | 53,5 | 5,7 | 1,5 | 24,3 | 5 |
| 3 (Vergleich) | 1,5 | 53,5 | 5,7 | 10 | 24,3 | 5 |
| 4 (Vergleich) | - | 63,5 | 5,7 | 1,5 | 24,3 | 5 |
| 5 | 55 | 9 | 4,75 | 1 | 20,25 | 10 |
| 6 (Vergleich) | 9 | 55 | 4,75 | 1 | 20,25 | 10 |
| 7 (Vergleich) | 1 | 55 | 4,75 | 9 | 20,25 | 10 |

**Tabelle 6: Meßdaten der Massen**

| Beispiel | $a_k^{RT}$ $(kJ/m^2)$ | $a_k^{-40^\circ C}$ $(kJ/m^2)$ | Hc $(N/mm^2)$ | Vicat B $(^\circ C)$ | MVI $(cm^3/10min)$ | Glanzgrad |
|---|---|---|---|---|---|---|
| 1 | 25 | 10 | 101 | 96 | 20 | 87 |
| 2 (Vergleich) | 11 | 6 | 99 | 95 | 81 | 83 |
| 3 (Vergleich) | 3 | 3 | 101 | 91 | 214 | 86 |
| 4 (Vergleich) | 6 | 5 | 105 | 95 | 127 | 84 |
| 5 | 28 | 11 | 87 | 91 | 28 | 86 |
| 6 (Vergleich) | 9 | 6 | 87 | 90 | 94 | 83 |
| 7 (Vergleich) | 4 | 3 | 86 | 89 | 206 | 83 |

## Patentansprüche

**1.** Thermoplastische Massen enthaltend

A) 5 bis 80 Gew.-Teile thermoplastisches Co-oder Terpolymerisat aus den Monomeren Styrol, α-Methylotyrol, Methylmethacrylat, Acrylnitril mit einem mittleren Molekulargewicht ($\overline{M}_w$) von 70.000 bis weniger als 120.000,

B) 1 bis 30 Gew.-Teile thermoplastisches Copolymerisat aus 60 bis 95 Gew.-% Styrol und/oder α-Methylstyrol und 40 bis 5 Gew.-% Acrylnitril mit einem mittleren Molekulargewicht ($\overline{M}_w$) von 25.000 bis 60.000,

C) 0,1 bis 10 Gew.-Teile thermoplastisches Co-oder Terpolymerisat aus den Monomeren Styrol, α-Methylstyrol, Methylmethacrylat, Acrylnitril mit einem mittleren Molekulargewicht ($\overline{M}_W$) von 1.500 bis 6.000 und

D) 0,5 bis 50 Gew.-Teile teilchenförmigen gepfropften Kautschuk mit einer Glasübergangstemperatur ≤ 10°C und einem mittleren Teilchendurchmesser ($d_{50}$) von 0,05 bis 0,50 µm, der pro 100 Gew.-Teile Kautschuk 15 bis 80 Gew.-Teile eines Polymerisats aus Styrol, Methylmethacrylat, Acrylnitril oder Mischungen daraus chemisch gebunden enthält.

**2.** Thermoplastische Massen nach Anspruch 1 enthaltend

20 bis 70 Gew.-Teile A) mit einem mittleren Molekulargewicht ($\overline{M}$ w) von 75.000 bis weniger als 120.000,

4 bis 20 Gew.-Teile B) aus 65 bis 85 Gew.-% Styrol und/oder α-Miethylstyrol und 35 bis 15 Gew.-% Acrylnitril mit einem mittleren Molekulargewicht ($\overline{M}_W$) von 30.000 bis 55.000,

0,5 bis 5 Gew.-Teile C) mit einem mittleren Molekulargewicht ($\overline{M}_W$) von 2.000 bis 6.000 und

1 bis 40 Gew.-Teile D) mit einem mittleren Teilchendurchmesser ($d_{50}$) von 0,10 bis 0,45 µm, und pro 100 Gew.-Teile Kautschuk 20 bis 75 Gew.-Teile des Polymerisats.

**3.** Thermoplastische Massen nach Anspruch 1 enthalten zusätzlich

E) 10 bis 300 Gew.-Teile, vorzugsweise 25 bis 200 Gew.-Teile, und besonders bevorzugt 25 bis 150 Gew.-Teile pro 100 Gew.-Teile A+B+C+D, aromatisches Polycarbonat und/oder Polyalkylenterephthalat.

**4.** Thermoplastische Massen nach Anspruch 1 enthaltend zusätzlich

F) 1 bis 40 Gew.-Teile, vorzugsweise 2,5 bis 30 Gew.-Teile, und besonders bevorzugt 2,5 bis 15 Gew.-Teile, thermoplastisches Polyurethan.

**5.** Thermoplastische Massen nach Anspruch 1 enthaltend

A) 5 bis 60 Gew.-Teile thermoplastisches Co- oder Terpolymerisat aus den Monomeren Styrol, α-Methylstyrol, Methylmethacrylat, Acrylnitril mit einem mittleren Molekulargewicht ($\overline{M}_w$) von 70.000 bis weniger als 120.000,

B) 1 bis 15 Gew.-Teile thermoplastisches Copolymerisat aus 60 bis 95 Gew.-% Styrol und/oder α-Methylstyrol und 40 bis 5 Gew.-% Acrylnitril mit einem mittleren Molekulargewicht ($\overline{M}_w$) von 25.000 bis 60.000,

C) 0,1 bis 5 Gew.-Teile thermoplastisches Co-oder Terpolymerisat aus dem Monomeren, Styrol, α-Methylstyrol, Methylmethacrylat, Acrylnitril mit einem mittleren Molekulargewicht ($\overline{M}_w$) von 1.500 bis 6.000,

D) 0,5 bis 40 Gew.-Teile teilchenförmigen gepfropften Kautschuk mit einer Glasübergangstemperatur ≤ 10°C und einem mittleren Teilchendurchmesser ($d_{50}$) von 0,05 bis 0,50 µm, der pro 100 Gew.-Teile Kautschuk 15 bis 80 Gew.-Teile eines Polymerisats aus Styrol, Methylmethacrylat, Acrylnitril oder Mischungen daraus chemisch gebunden enthält und

E) 10 bis 300 Gew.-Teile pro 100 Gew.-Teile A+B+C+D aromatisches Polycarbonat und/oder Polyalkylenteraphthalat.

**6.** Thermoplastische Massen nach Anspruch 1 enthaltend

A) 10 bis 80 Gew.-Teile thermoplastisches Co-oder Terpolymerisat aus den Monomeren Styrol, α-Methylstyrol,

Methylmethacrylat, Acrylnitril mit einem mittleren Molekulargewicht ($\overline{M}_w$) von 70.000 bis weniger als,

B) 2,5 bis 30 Gew.-Teile thermoplastisches Copolymerisat aus 60 bis 95 Gew.-% Styrol und/oder α-Methylstyrol und 40 bis 5 Gew.-% Acrylnitril mit einem mittleren Molekulargewicht ($\overline{M}_w$) von 25.000 bis 60.000,

C) 0,1 bis 5 Gew.-Teile thermoplastisches Co-oder Terpolymerisat aus dem Monomeren, Styrol, α-Methylstyrol, Methylmethacrylat, Acrylnitril mit einem mittleren Molekulargewicht ($\overline{M}_w$) von 1.500 bis 6.000,

D) 0,5 bis 50 Gew.-Teile teilchenförmigen gepfropften Kautschuk mit einer Glasübergangstemperatur ≤ 10°C und einem mittleren Teilchendurchmesser ($d_{50}$) von 0,05 bis 0,50 µm, der pro 100 Gew.-Teile Kautschuk 15 bis 80 Gew.-Teile eines Polymerisats aus Styrol, Methylmethacrylat, Acrylnitril oder Mischungen daraus chemisch gebunden enthält und F) 1 bis 40 Gew.-Teile thermoplastisches Polyurethan.

**7.** Verfahren zur Herstellung von thermoplastischen Massen gemäß Ansprüchen 1 bis 6, worin man zunächst die Komponenten B, C und D mischt und anschließend die resultierende Mischung mit Komponente A und gegebenenfalls E oder F vermischt.

**8.** Verwendung der Massen gemäß Ansprüchen 1 bis 6 als Formmassen zur Herstellung von Formkörpern.

## Claims

**1.** Thermoplastic compositions containing

A) 5 to 80 parts by weight of a thermoplastic co-or terpolymer made from the monomers styrene, α-methylstyrene, methyl methacrylate, acrylonitrile with an average molecular weight ($\overline{M}_w$) of 70,000 to less than 120,000,

B) 1 to 30 parts by weight of a thermoplastic copolymer made from 60 to 95 wt.% of styrene and/or α-methylstyrene and 40 to 5 wt.% of acrylonitrile with an average molecular weight ($\overline{M}_w$) of 25,000 to 60,000,

C) 0.1 to 10 parts by weight of a thermoplastic co- or terpolymer made from the monomers styrene, α-methylstyrene, methyl methacrylate, acrylonitrile, with an average molecular weight ($\overline{M}_w$) of 1,500 to 6,000 and

D) 0.5 to 50 parts by weight of a particulate graft rubber with a glass transition temperature of ≤ 10°C and an average particle diameter ($d_{50}$) of 0.05 to 0.50 µm, which contains 15 to 80 parts by weight of a chemically bonded polymer made from styrene, methyl methacrylate, acrylonitrile or mixtures thereof per 100 parts by weight of rubber.

**2.** Thermoplastic compositions according to Claim 1 containing

20 to 70 parts by weight of A) with an average molecular weight ($\overline{M}_w$) of 75,000 to less than 120,000,

4 to 20 parts by weight of B), made from 65 to 85 wt.% of styrene and/or α-methylstyrene and 35 to 15 wt.% of acrylonitrile, with an average molecular weight ($\overline{M}_w$) of 30,000 to 55,000,

0.5 to 5 parts by weight of C) with an average molecular weight ($\overline{M}_w$) of 2,000 to 6,000 and

1 to 40 parts by weight of D) with an average particle diameter ($d_{50}$) of 0.10 to 0.45 µm and 20 to 75 parts by weight of the polymer per 100 parts by weight of rubber.

**3.** Thermoplastic compositions according to Claim 1 containing, in addition,

E) 10 to 300 parts by weight , preferably 25 to 200 parts by weight and in particular 25 to 150 parts by weight of aromatic polycarbonate and/or polyalkylene terephthalate, per 100 parts by weight of A+B+C+D.

**4.** Thermoplastic compositions according to Claim 1 containing, in addition,

F) 1 to 40 parts by weight, preferably 2.5 to 30 parts by weight and in particular 2.5 to 15 parts by weight of

thermoplastic polyurethane.

**5.** Thermoplastic compositions according to Claim 1, containing

A) 5 to 60 parts by weight of a thermoplastic co-or terpolymer made from the monomers styrene, α-methylstyrene, methyl methacrylate, acrylonitrile with an average molecular weight ($\overline{M}_w$) of 70,000 to less than 120,000,

B) 1 to 15 parts by weight of a thermoplastic copolymer made from 60 to 95 wt.% of styrene and/or α-methylstyrene and 40 to 5 wt.% of acrylonitrile with an average molecular weight ($\overline{M}_w$) of 25,000 to 60,000,

C) 0.1 to 5 parts by weight of a thermoplastic co-or terpolymer made from the monomers styrene, α-methylstyrene, methyl methacrylate, acrylonitrile, with an average molecular weight ($\overline{M}_w$) of 1,500 to 6,000,

D) 0.5 to 40 parts by weight of a particulate graft rubber with a glass transition temperature of ≤ 10°C and an average particle diameter ($d_{50}$) of 0.05 to 0.50 µm, which contains 15 to 80 parts by weight of a chemically bonded polymer made from styrene, methyl methacrylate, acrylonitrile or mixtures thereof per 100 parts by weight of rubber and

E) 10 to 300 parts by weight of aromatic polycarbonate and/or polyalkylene terephthalate per 100 parts by weight of A+B+C+D.

**6.** Thermoplastic compositions according to Claim 1, containing

A) 10 to 80 parts by weight of a thermoplastic co-or terpolymer made from the monomers styrene, α-methylstyrene, methyl methacrylate, acrylonitrile with an average molecular weight ($\overline{M}_w$) of 70,000 to less than 120,000,

B) 2.5 to 30 parts by weight of a thermoplastic copolymer made from 60 to 95 wt.% of styrene and/or α-methylstyrene and 40 to 5 wt.% of acrylonitrile with an average molecular weight ($\overline{M}_w$) of 25,000 to 60,000,

C) 0.1 to 5 parts by weight of a thermoplastic co-or terpolymer made from the monomers styrene, α-methylstyrene, methyl methacrylate, acrylonitrile, with an average molecular weight ($\overline{M}_w$) of 1,500 to 6,000,

D) 0.5 to 50 parts by weight of a particulate graft rubber with a glass transition temperature of ≤ 10°c and an average particle diameter ($d_{50}$) of 0.05 to 0.50 µm, which contains 15 to 80 parts by weight of a chemically bonded polymer made from styrene, methyl methacrylate, acrylonitrile or mixtures thereof per 100 parts by weight of rubber and

F) 1 to 40 parts by weight of thermoplastic polyurethane.

**7.** A process for the preparation of thermoplastic compositions according to Claims 1 to 6, in which the components B, C and D are mixed first and the resulting mixture is then blended with component A and optionally E or F.

**8.** Use of the compositions according to Claims 1 to 6 as moulding compositions for the production of moulded items.

## Revendications

**1.** Matières à mouler thermoplastiques contenant

A) 5 à 80 parties en poids d'un copolymère binaire ou ternaire thermoplastique des monomères styrène, α-méthylstyrène, méthacrylate de méthyle, acrylonitrile, à un poids moléculaire moyen ($\overline{M}_w$) de 70 000 au minimum mais inférieur à 120 000,
B) 1 à 30 parties en poids d'un copolymère thermoplastique de 60 à 95% en poids de styrène et/ou d'α-méthylstyrène et de 40 à 5% en poids d'acrylonitrile, à un poids moléculaire moyen ($\overline{M}_w$) de 25 000 à 60 000,
C) 0,1 à 10 parties en poids d'un copolymère binaire ou ternaire thermoplastique des monomères styrène, α-méthylstyrène, méthacrylate de méthyle, acrylonitrile, à un poids moléculaire moyen ($\overline{M}_w$) de 1 500 à 6 000 et
D) 0,5 à 50 parties en poids d'un caoutchouc greffé à l'état de particules, ayant une température de transition

du second ordre inférieure ou égale à 10°C et un diamètre de particule moyen $d_{50}$ de 0,05 à 0,50 µm, qui contient à l'état chimiquement combiné, pour 100 parties en poids de caoutchouc, 15 à 80 parties en poids d'un polymère du styrène, du méthacrylate de méthyle, de l'acrylonitrile ou leur mélange.

**2.** Matières à mouler thermoplastiques selon revendication 1, contenant 20 à 70 parties en poids de A) à un poids moléculaire moyen ($\overline{M}_w$) de 75 000 au minimum mais inférieur à 120 000,

4 à 20 parties en poids d'un copolymère B) de 65 à 85% en poids de styrène et/ou d'α-méthylstyrène et 35 à 15% en poids d'acrylonitrile, à un poids moléculaire moyen ($\overline{M}_w$) de 30 000 à 55 000,
0,5 à 5 parties en poids de C), à un poids moléculaire moyen ($\overline{M}_w$) de 2 000 à 6 000 et
1 à 40 parties en poids de D), à un diamètre de particule moyen $d_{50}$ de 0,10 à 0,45 µm, contenant 20 à 75 parties en poids du polymère pour 100 parties en poids du caoutchouc.

**3.** Matières à mouler thermoplastiques selon revendication 1, contenant en outre

E) 10 à 300 parties en poids, de préférence 25 à 200 parties en poids et plus spécialement 25 à 150 parties en poids, pour 100 parties en poids de A+B+C+D, d'un polycarbonate aromatique et/ou de téréphtalate de polyalkylène.

**4.** Matières à mouler thermoplastiques selon revendication 1, contenant en outre

F) 1 à 40 parties en poids, de préférence 2,5 à 30 parties en poids et plus spécialement 2,5 à 15 parties en poids, d'un polyuréthane thermoplastique.

**5.** Matières à mouler thermoplastiques selon revendication 1, contenant

A) 5 à 60 parties en poids d'un copolymère binaire ou ternaire thermoplastique des monomères styrène, α-méthylstyrène, méthacrylate de méthyle, acrylonitrile, à un poids moléculaire moyen ($\overline{M}_w$) de 70 000 au minimum mais inférieur à 120 000,
B) 1 à 15 parties en poids d'un copolymère thermoplastique de 60 à 95% en poids de styrène et/ou d'α-méthylstyrène et 40 à 5% en poids d'acrylonitrile, à un poids moléculaire moyen ($\overline{M}_w$) de 25 000 à 60 000,
C) 0,1 à 5 parties en poids d'un copolymère binaire ou ternaire thermoplastique des monomères styrène, α-méthylstyrène, méthacrylate de méthyle, acrylonitrile, à un poids moléculaire moyen ($\overline{M}_w$) de 1 500 à 6 000,
D) 0,5 à 40 parties en poids d'un caoutchouc greffé à l'état de particules, ayant une température de transition du second ordre inférieure ou égale à 10°C et un diamètre de particule moyen $d_{50}$ de 0,05 à 0,50 µm, et qui contient à l'état chimiquement combiné, pour 100 parties en poids du caoutchouc, de 15 à 80 parties en poids d'un polymère du styrène, du méthacrylate de méthyle, de l'acrylonitrile ou leurs mélanges et
E) 10 à 300 parties en poids, pour 100 parties en poids de A+B+C+D, d'un polycarbonate aromatique et/ou de téréphtalate de polyalkylène.

**6.** Matières à mouler thermoplastiques selon revendication 1, contenant

A) 10 à 80 parties en poids d'un copolymère binaire ou ternaire thermoplastique des monomères styrène, α-méthylstyrène, méthacrylate de méthyle, acrylonitrile, à un poids moléculaire moyen ($\overline{M}_w$) de 70 000 au minimum mais inférieur à
B) 2,5 à 30 parties en poids d'un copolymère thermoplastique de 60 à 95% en poids de styrène et/ou d'α-méthylstyrène et 40 à 5% en poids d'acrylonitrile, à un poids moléculaire moyen ($\overline{M}_w$) de 25 000 à 60 000,
C) 0,1 à 5 parties en poids d'un copolymère binaire ou ternaire thermoplastique des monomères styrène, α-méthylstyrène, méthacrylate de méthyle, acrylonitrile, à un poids moléculaire moyen ($\overline{M}_w$) de 1 500 à 6 000,
D) 0,5 à 50 parties en poids d'un caoutchouc greffé à l'état de particules ayant une température de transition du second ordre inférieure ou égale à 10°C et un diamètre de particule moyen $d_{50}$ de 0,05 à 0,50 µm, et qui contient à l'état chimiquement combiné, pour 100 parties en poids du caoutchouc, 15 à 80 parties en poids d'un polymère du styrène, du méthacrylate de méthyle, de l'acrylonitrile ou leurs mélanges et
F) 1 à 40 parties en poids d'un polyuréthane thermoplastique

**7.** Procédé de préparation des matières à mouler thermoplastiques selon revendication 1 à 6, dans lequel on mélange d'abord les composants B, C et D puis on ajoute ce mélange aux composants A et le cas échéant E ou F et on mélange.

**8.** Utilisation des matières à mouler selon revendications 1 à 6 pour la fabrication d'objets moulés.